# EUROPEAN PATENT SPECIFICATION

(11) **EP 3 901 516 B1**
(45) Date of publication and mention of the grant of the patent: **20.07.2022**
(21) Application number: 21166977.5
(22) Date of filing: 06.04.2021
(51) Int. Cl.: F21S 41/24, F21S 41/39, B60Q 1/00, B62J 17/02, B62J 6/024

(54) **STRADDLED VEHICLE**
GRÄTSCHSITZFAHRZEUG
VÉHICULE À ENFOURCHER

(30) Priority: 21.04.2020 JP 2020075745
(43) Date of publication of application: 27.10.2021
(73) Proprietor: Yamaha Hatsudoki Kabushiki Kaisha, Iwata-shi, Shizuoka 438-8501 (JP)
(72) Inventor: YAGI, Kyohei, Iwata-shi, Shizuoka, 4388501 (JP); MIURA, Naoyuki, Iwata-shi, Shizuoka, 4388501 (JP); KAWANO, Takayuki, Iwata-shi, Shizuoka, 4388501 (JP)
(74) Representative: Di Sciuva, Michele

(56) References cited:
- EP-A1- 2 138 390
- EP-A1- 2 639 147
- EP-A2- 3 115 286
- JP-A- H08 310 464
- JP-A- 2007 038 727
- JP-A- 2010 165 583
- US-A1- 2010 195 341

## Description

### BACKGROUND

### Field of the Invention

The present invention relates to a straddled vehicle.

### Background Information

A straddled vehicle includes a headlight unit. The headlight unit includes a low-beam light and a high-beam light. The optical axis of the low-beam light is oriented more downward than that of the high-beam light. Light emitted from the low-beam light illuminates the road surface ahead of the straddled vehicle. The optical axis of the high-beam light is oriented more upward than that of the low-beam light. Light emitted from the high-beam light illuminates farther than that emitted from the low-beam light.

For example, in a straddled vehicle described in Japan Laid-open Patent Application Publication No. 2012-121450, which discloses the preamble of claim 1, the headlight unit is disposed in a handle cover. In other words, both the low-beam light and the high-beam light are disposed in the handle cover. By contrast, in a straddled vehicle described in Japan Laid-open Patent Application Publication No. 2017-132436, the headlight unit is disposed in a front cover disposed below the handle cover. In other words, both the low-beam light and the high-beam light are disposed in the front cover.

### SUMMARY

The handle cover is turned together with a handle. Because of this, when the headlight unit is disposed in the handle cover as described in Japan Laid-open Patent Application Publication No. 2012-121450, the handle cover is increased in weight, whereby comfortableness in steering is degraded. Incidentally, with increase in quantity of light, the high-beam light is capable of illuminating farther. Therefore, for further enhancement in performance of the high-beam light, it is required to increase the size of the high-beam light or to increase the intensity of light from the high-beam light. However, when the high-beam light is disposed in the handle cover as described in Japan Laid-open Patent Application Publication No. 2012-121450, increase in size of the high-beam light is not easy because of compactness in size of the handle cover. On the other hand, when the intensity of light from the high-beam light is increased, a countermeasure is required for heat generated from the high-beam light. Therefore, it is not easy to configure the high-beam light to reliably emit a large quantity of light.

By contrast, when the headlight unit is disposed in the front cover as described in Japan Laid-open Patent Application Publication No. 2017-132436, the handle cover can be made lightweight. Because of this, comfortableness in steering is enhanced. On the other hand, with proximity of the low-beam light to the ground, a center part of an irradiation range of light on the road surface is illuminated with higher-intensity light; the center part shines in white and is made less visible in some cases. Besides, light-dark difference is made distinct between a high-intensity light irradiation range and a low-intensity light irradiation range disposed outside the high-intensity light irradiation range. Because of this, the low-intensity light irradiation range is perceived darker than the high-intensity light irradiation range; the low-intensity light irradiation range is made less invisible in some cases. Thus, a driver of the straddled vehicle is only capable of appropriately recognizing a condition of a narrow range of the road surface in some cases. Consequently, in order to grasp the road surface condition as easily as possible, it is preferable for the low-beam light to be disposed in a high position as far away as possible from the road surface.

Even when disposed in a low position, the low-beam light is enabled to illuminate a wide range of the road surface by devising the structure thereof. In this case, however, the structure of the low-beam light is made complicated, whereby the headlight unit is entirely enlarged. Besides, the front cover is enlarged to accommodate the enlarged headlight unit, whereby a front part of the straddled vehicle tends to be enlarged.

It is an object of the present invention to provide a straddled vehicle that enables increase in quantity of light from a high-beam light with ease, enables easy grasp of a road surface condition in use of a low-beam light, and enables highly comfortable steering.

A straddled vehicle according to an aspect of the present invention includes a head pipe, a front fork, a front wheel, a handle, a handle cover, a front cover, a first headlight unit, and a second headlight unit. The front fork is supported by the head pipe so as to be turnable. The front wheel is supported by the front fork so as to be rotatable. The handle is connected to the front fork. The handle cover is turned together with the handle. The handle cover includes a front portion and a rear portion. The front portion is disposed in front of the handle. The rear portion is disposed behind the handle. The front cover is disposed in front of the head pipe and below the handle cover. The first headlight unit is provided in the handle cover. The second headlight unit is provided in the front cover. The first headlight unit includes a low-beam light. The second headlight unit includes a high-beam light.

In the straddled vehicle according to the present aspect, the low-beam light is disposed in the handle cover. As a result of keen study, the inventor of the present invention found that a driver can easily grasp a road surface condition (e.g., pebbly road surface, uneven and rough road surface, etc.) by irradiating the road surface with moderate-intensity light rather than with high-intensity light. When the low-beam light is disposed in a low position, a middle part in an irradiation range of light is illuminated with high-intensity light, whereas a part disposed outside the middle part in the irradiation range of light is illuminated with dark light. In comparison with such a condition as described above, the low-beam light is herein disposed in a high position away from the ground, whereby the middle part and the part disposed outside the middle part in the irradiation range of light are illuminated with uniform-intensity light. Because of this, the irradiation range of light can be entirely illuminated with a moderate quantity of light. As a result, the driver can easily grasp details of the road surface condition. Besides, due to the low-beam light disposed in the high position away from the ground, a wide range of the road surface can be illuminated without applying a complicated structure to the low-beam light. On the other hand, the high-beam light is disposed in the front cover. The front cover is larger than the handle cover. Hence, increase in size of the high-beam light is made easy. Alternatively, increase in size of the high-beam light can be made by utilizing a space conventionally used for disposing the low-beam light. Because of this, increase in quantity of light from the high-beam light is made easy. Moreover, the low-beam light and the high-beam light are separately disposed in the handle cover and the front cover, respectively. Because of this, in comparison with a structure that the low-beam light is disposed in the front cover, the low-beam light can be made compact and simple in structure, while being capable of reliably irradiating a wide range with light. Because of this, the handle cover is made lightweight. Consequently, comfortableness in steering is enhanced.

The straddled vehicle may further include right and left flashers. The right and left flashers may be disposed in the front cover. In this case, the headlight cover is made more lightweight than when the right and left flashers are disposed in the handle cover. Accordingly, comfortableness in steering is enhanced. Besides, the right and left flashers can be disposed away from the low-beam light in an up-and-down direction. Accordingly, the right and left flashers can be enhanced in distinguishability.

The right and left flashers may be located lower than the high-beam light. In this case, the right and left flashers can be disposed away from the low-beam light and the high-beam light in the up-and-down direction. Accordingly, the right and left flashers can be enhanced in distinguishability.

The front cover may include a main front cover, a left front cover, and a right front cover. The main front cover may be disposed above the front wheel as seen in a vehicle front view. The left front cover may extend downward from the main front cover and may be disposed at least in part on left of the front wheel as seen in the vehicle front view. The right front cover may extend downward from the main front cover and may be disposed at least in part on right of the front wheel as seen in the vehicle front view. The second headlight unit may be disposed in the main front cover. The left flasher may be disposed in the left front cover. The right flasher may be disposed in the right front cover. In this case, the right and left flashers can be disposed away from the low-beam light and the high-beam light in a vehicle width direction. Accordingly, the right and left flashers can be enhanced in distinguishability.

The straddled vehicle may further include a position light. The position light may be disposed in the front cover. In this case, in comparison with a structure that the position light is disposed in the handle cover, the position light can be disposed away from the low-beam light in the up-and-down direction. Accordingly, the position light can be enhanced in distinguishability.

The position light may be disposed above the high-beam light. In this case, the position light can be enhanced in distinguishability.

The low-beam light may include a first light source and a first reflector. The first reflector may be disposed at least in part on a more rear side than the first light source. The first reflector may forwardly reflect light emitted from the first light source. In this case, in comparison with the structure that the low-beam light is disposed in the front cover, the first reflector can be made compact and simple in structure, while the low-beam light is capable of reliably irradiating a wide range with light.

A laterally outer end of the second headlight unit is located on a laterally outer side than a laterally outer end of the first headlight unit. In this case, an irradiation range of light from the high-beam light can be extended by increase in size of the second headlight unit.

Overall, according to the present invention, it is possible to provide a straddled vehicle that enables increase in quantity of light from a high-beam light with ease, enables easy grasp of a road surface condition in use of a low-beam light, and enables highly comfortable steering.

### BRIEF DESCRIPTION OF THE DRAWINGS

FIG. 1 is a side view of a straddled vehicle according to an embodiment.
FIG. 2 is a front view of the straddled vehicle.
FIG. 3 is a left side view of a front part of the straddled vehicle.
FIG. 4 is a right side view of the front part of the straddled vehicle.
FIG. 5 is a front view of the front part of the straddled vehicle.
FIG. 6 is a rear view of a handle cover.
FIG. 7 is a diagram showing an irradiation range of light from a low-beam light and that from a high-beam light.
FIG. 8 is a side view of a first headlight unit and a second headlight unit.
FIG. 9 is a front view of the first headlight unit and the second headlight unit.
FIG. 10 is a cross-sectional view of FIG. 5 taken along line X-X.
FIG. 11 is a cross-sectional view of FIG. 5 taken along line XI-XI.

### DETAILED DESCRIPTION OF EMBODIMENTS

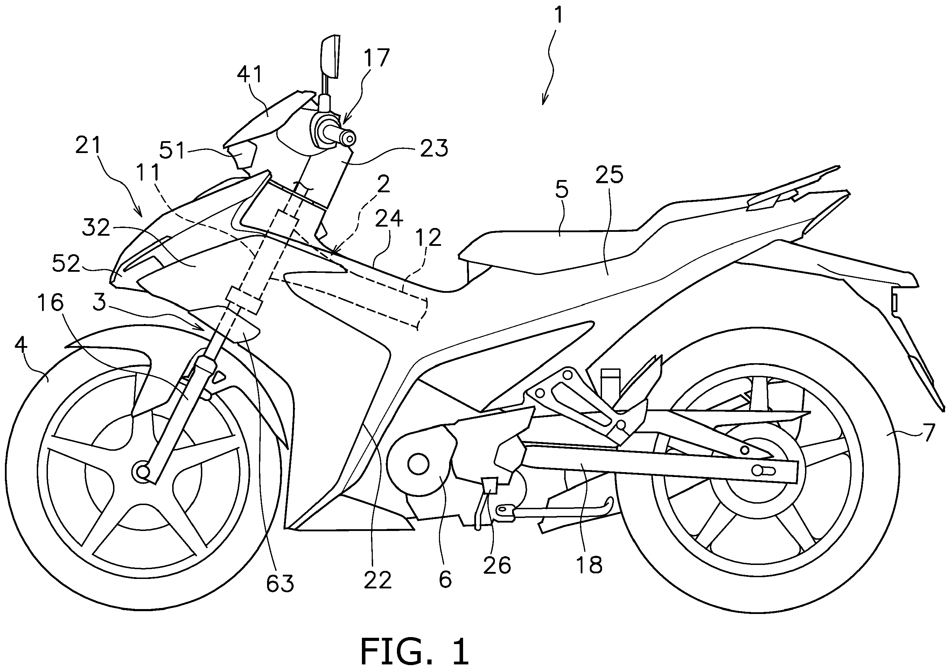

A straddled vehicle according to an embodiment of the present invention will be hereinafter explained with reference to drawings. FIG. 1 is a side view of a straddled vehicle 1 according to the embodiment. The straddled vehicle 1 according to the present embodiment is a moped-type vehicle. As shown in FIG. 1, the straddled vehicle 1 includes a vehicle body frame 2, a steering device 3, a front wheel 4, a seat 5, a power unit 6, and a rear wheel 7. It should be noted that in the following explanation, front, rear, right, and left directions are defined as indicating front, rear, right, and left directions seen from a driver seated on the seat 5.

The vehicle body frame 2 includes a head pipe 11 and a main frame 12. The head pipe 11 is disposed in the middle of the vehicle in a right-and-left direction. The head pipe 11 extends forward and downward. The main frame 12 extends backward from the head pipe 11.

The steering device 3 is supported by the head pipe 11 so as to be turnable. The steering device 3 supports the front wheel 4 such that the front wheel 4 is rotatable. The steering device 3 includes a front fork 16 and a handle member 17. The front fork 16 is supported by the head pipe 11 so as to be turnable. The front wheel 4 is supported by the front fork 16 so as to be rotatable. The handle member 17 can be operated by the driver in order to turn the front wheel 4. The handle member 17 is connected to the front fork 16. The handle member 17 extends in the right-and-left direction.

The seat 5 is disposed behind the head pipe 11. The seat 5 is disposed above the main frame 12. The power unit 6 is disposed below the seat 5. The power unit 6 includes, for instance, an internal combustion engine. Alternatively, the power unit 6 may include an electric motor. The power unit 6 is supported by the main frame 12. The rear wheel 7 is supported by a swing arm 18 so as to be rotatable. The swing arm 18 is supported by either the main frame 12 or the power unit 6 so as to be swingable.

The straddled vehicle 1 includes a front cover 21, a leg shield 22, a handle cover 23, a center cover 24, and a side cover 25. The front cover 21 is fixed to the vehicle body frame 2. The front cover 21 is disposed in front of and on the laterally right and left of the head pipe 11. The front cover 21 is disposed below the handle cover 23.

The leg shield 22 is disposed behind the front cover 21. The leg shield 22 is disposed in front of footrests 26. Each footrest 26 is made in the shape of a rod. The footrests 26 are disposed on the lateral sides of the power unit 6. The leg shield 22 extends from a lower position than the footrests 26 to an upper position than the footrests 26. The leg shield 22 extends to a corresponding position to the height of the center cover 24.

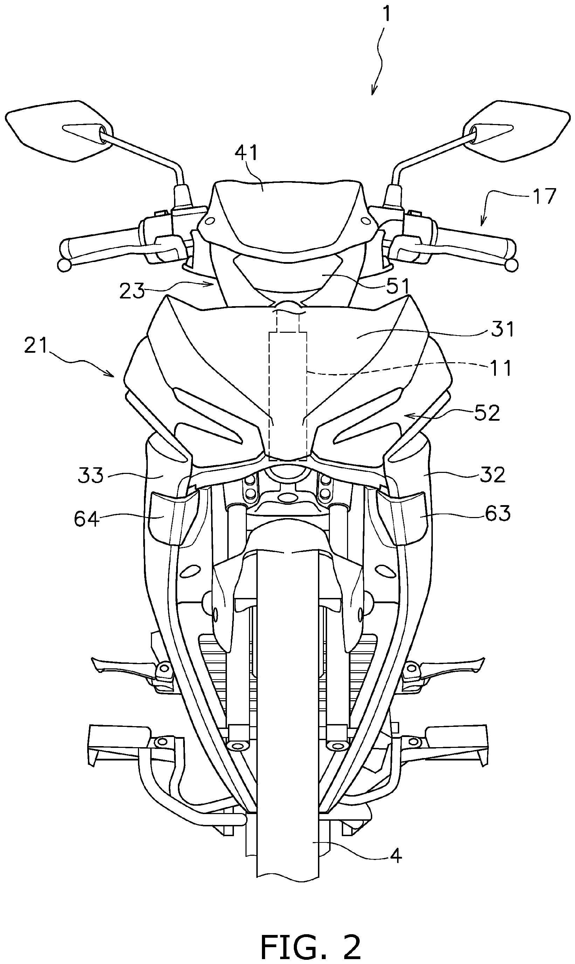

FIG. 2 is a front view of the front cover 21. As shown in FIG. 2, the front cover 21 includes a main front cover 31, a left front cover 32, and a right front cover 33. The main front cover 31 is disposed in front of the head pipe 11. As seen in the vehicle front view, the main front cover 31 overlaps the head pipe 11. As seen in the vehicle front view, the main front cover 31 is disposed below the handle cover 23. As seen in the vehicle front view, the main front cover 31 is disposed above the front wheel 4.

As seen in the vehicle front view, the left front cover 32 extends downward from the main front cover 31. As seen in the vehicle front view, the left front cover 32 is disposed at least in part on the left of the front wheel 4. The left front cover 32 is disposed on the left of the front fork 16. As seen in the vehicle side view, the left front cover 32 overlaps the front fork 16. As seen in the vehicle side view, the left front cover 32 is disposed at least in part behind the front wheel 4. The left front cover 32 extends from an upper position than a top portion of the front wheel 4 to a lower position than the rotational center of the front wheel 4. The right front cover 33 is provided to be approximately bilateral symmetric to the left front cover 32. Because of this, detailed explanation of the right front cover 33 will be omitted.

The handle cover 23 covers part of the handle member 17. The handle cover 23 is located higher than the front cover 21. The handle cover 23 is located higher than the head pipe 11. The handle cover 23 is turnable together with the handle member 17 with respect to the front cover 21. The center cover 24 is disposed between the front cover 21 and the seat 5. The center cover 24 is disposed in front of the seat 5. The side cover 25 is disposed below the seat 5.

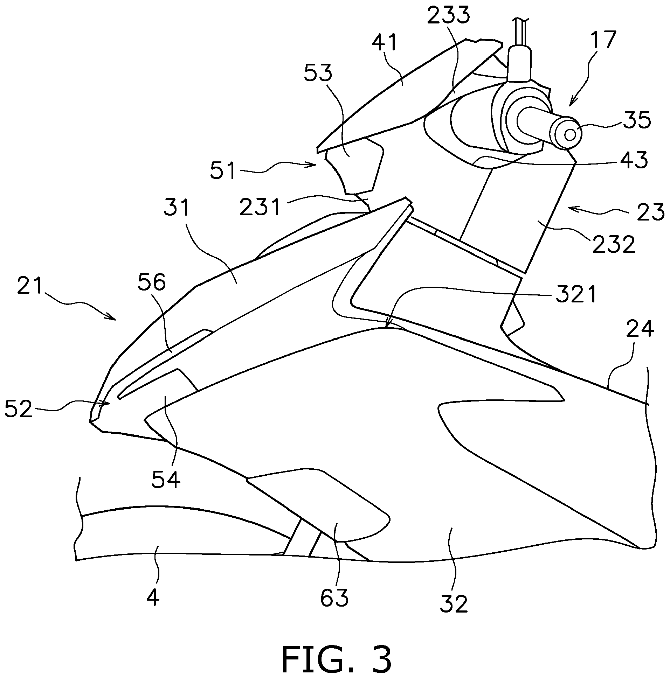

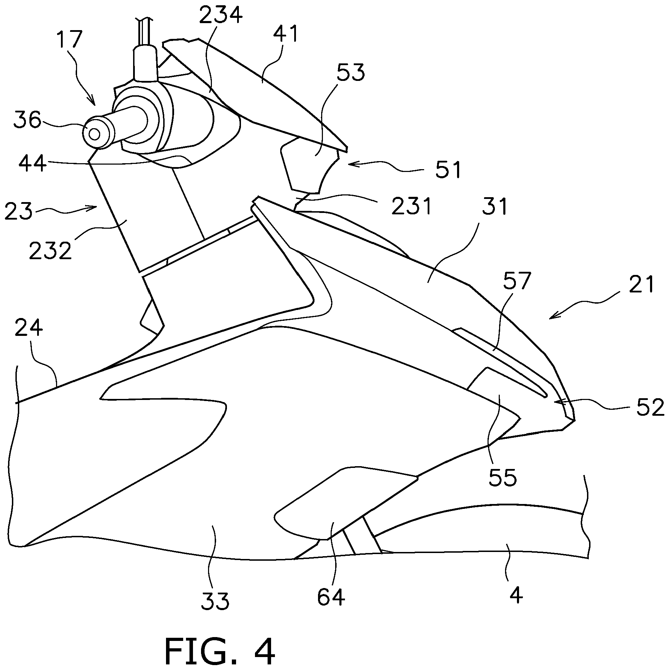

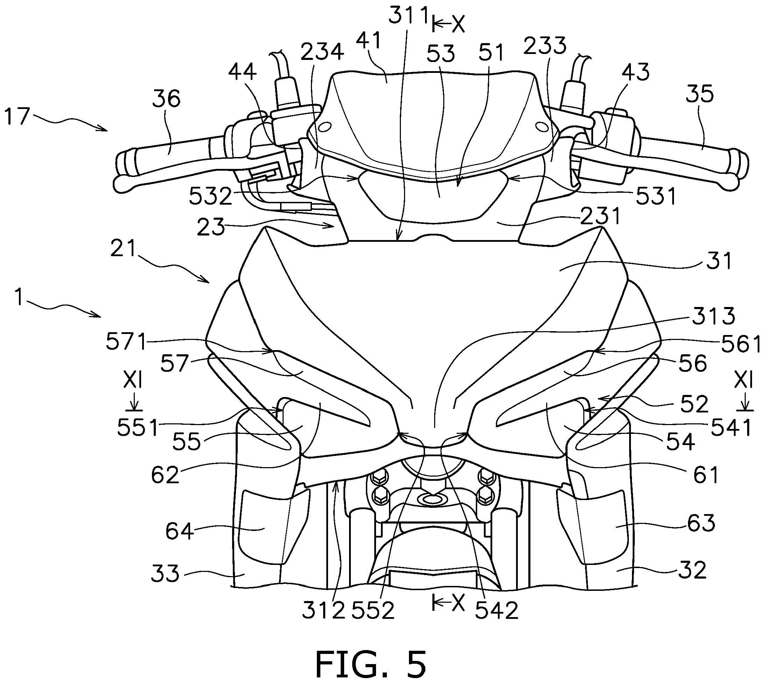

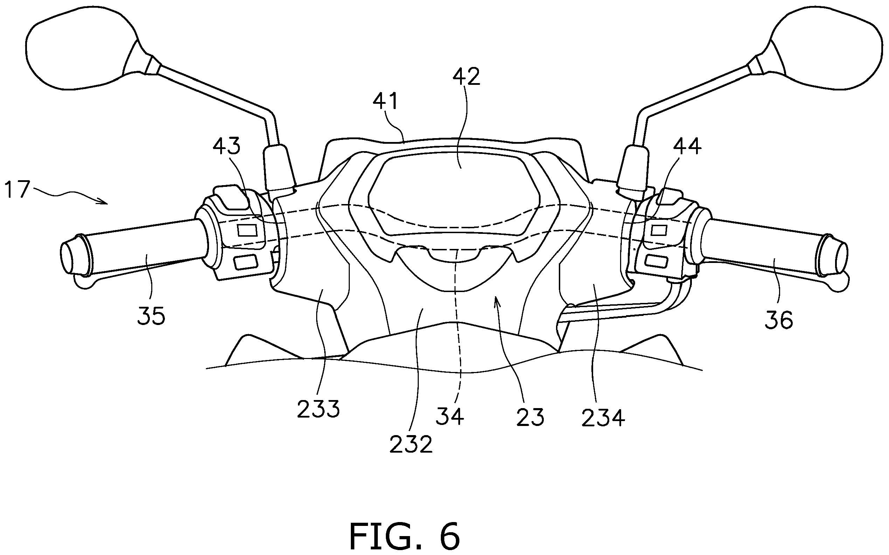

FIG. 3 is a left side view of a front part of the straddled vehicle 1. FIG. 4 is a right side view of the front part of the straddled vehicle 1. FIG. 5 is a front view of the front part of the straddled vehicle 1. FIG. 6 is a rear view of the handle cover 23. As shown in FIG. 6, the handle member 17 includes a handlebar 34, a left grip 35, and a right grip 36. The handlebar 34 is connected to the front fork 16. The handlebar 34 extends in the right-and-left direction. The left grip 35 is connected to the left end of the handlebar 34. The right grip 36 is connected to the right end of the handlebar 34.

The handle cover 23 covers the handlebar 34. The handlebar 34 protrudes rightward and leftward from the handle cover 23. The handle cover 23 is disposed between the left grip 35 and the right grip 36. The handle cover 23 is disposed in front of, behind, above, and on the right and left of the handlebar 34. When described in detail, the handle cover 23 includes a front portion 231, a rear portion 232, a left lateral portion 233, and a right lateral portion 234. The front portion 231 is disposed in front of the handle member 17. A wind shield 41 is attached to the front portion 231. The rear portion 232 is disposed behind the handle member 17. A meter panel 42 is attached to the rear portion 232. The meter panel 42 includes a speed meter. The left lateral portion 233 is connected to the front portion 231 and the rear portion 232. The left lateral portion 233 includes a left opening 43. The handle member 17 protrudes leftward from the left opening 43. The right lateral portion 234 is connected to the front portion 231 and the rear portion 232. The right lateral portion 234 includes a right opening 44. The handle member 17 protrudes rightward from the right opening 44.

As shown in FIG. 5, the straddled vehicle 1 includes a first headlight unit 51 and a second headlight unit 52. The first and second headlight units 51 and 52 are separated from each other. The first and second headlight units 51 and 52 are disposed away from each other. The first headlight unit 51 is provided in the handle cover 23. The first headlight unit 51 includes a low-beam light 53. The first headlight unit 51 is turned together with the handle cover 23. The first headlight unit 51 is turned in response to operating the handle member 17 by the driver. Therefore, an irradiation direction of light from the low-beam light 53 is changed in response to operating the handle member 17.

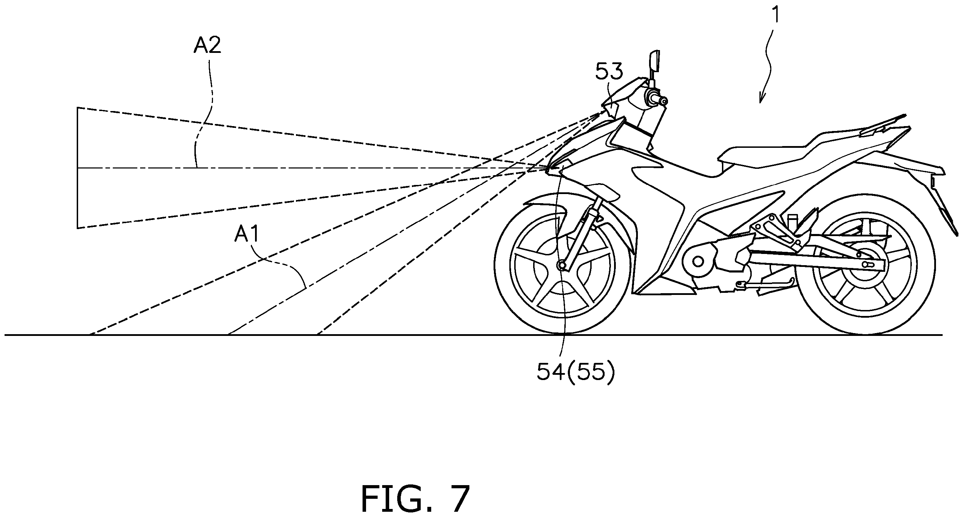

The second headlight unit 52 is provided in the front cover 21. The second headlight unit 52 is disposed in the main front cover 31. The second headlight unit 52 includes high-beam lights 54 and 55 and position lights 56 and 57. The second headlight unit 52 is provided in the front cover 21, while being immobile regardless of turning the handle cover 23. Therefore, an irradiation direction of light from each high-beam light 54, 55 is fixed to a vehicle traveling direction regardless of operating the handle member 17. FIG. 7 is a diagram showing an irradiation range of light from the low-beam light 53 and that from the high-beam lights 54 and 55. As shown in FIG. 7, an optical axis A2 of each high-beam light 54, 55 is oriented more upward than an optical axis A1 of the low-beam light 53.

As seen in the vehicle front view shown in FIG. 5, the low-beam light 53 is located higher than an upper edge 311 of the main front cover 31. The low-beam light 53 is located below the wind shield 41. The high-beam lights 54 and 55 are located below a lower side than the low-beam light 53. As seen in the vehicle front view, the high-beam lights 54 and 55 are disposed in positions closer to a lower edge 312 of the main front cover 31 than to the upper edge 311 of the main front cover 31. As seen in the vehicle side view shown in FIG. 3, the high-beam lights 54 and 55 are located at least in part lower than an upper end 321 of the left front cover 32. As seen in the vehicle side view, the high-beam lights 54 and 55 are located forward of the low-beam light 53.

As seen in the vehicle front view, a left-hand laterally outer end 541 of the high-beam lights 54 and 55 is located on a laterally outer side than a left-hand laterally outer end 531 of the low-beam light 53. As seen in the vehicle front view, a right-hand laterally outer end 551 of the high-beam lights 54 and 55 is located on a laterally outer side than a right-hand laterally outer end 532 of the low-beam light 53. As seen in the vehicle front view, distance between the left-hand and right-hand laterally outer ends 541 and 551 of the high-beam lights 54 and 55 is greater than that between the left-hand and right-hand laterally outer ends 531 and 532 of the low-beam light 53.

The high-beam lights 54 and 55 includes a left high-beam light 54 and a right high-beam light 55. As seen in the vehicle front view, the left and right high-beam lights 54 and 55 are disposed away from each other in a vehicle width direction. The main front cover 31 includes a protruding portion 313 protruding downward. The protruding portion 313 is disposed between the left and right high-beam lights 54 and 55. A laterally inner end 542 of the left high-beam light 54 is located on a laterally inner side than the left-hand laterally outer end 531 of the low-beam light 53. A laterally inner end 552 of the right high-beam light 55 is located on a laterally inner side than the right-hand laterally outer end 532 of the low-beam light 53. Distance between the laterally inner end 542 of the left high-beam light 54 and the laterally inner end 552 of the right high-beam light 55 is less than that between the left-hand and right-hand laterally outer ends 531 and 532 of the low-beam light 53.

The straddled vehicle 1 includes a left position light 56 and a right position light 57. The left and right position lights 56 and 57 are disposed in the front cover 21. The left position light 56 is disposed above the left high-beam light 54. As seen in the vehicle front view, the left position light 56 extends laterally outward and upward. The main front cover 31 includes a left partitioning portion 61. The left partitioning portion 61 is disposed between the left position light 56 and the left high-beam light 54. As seen in the vehicle front view, the left partitioning portion 61 extends toward the center of the vehicle from a position between the laterally outer end 541 of the left high-beam light 54 and a laterally outer end 561 of the left position light 56. The left position light 56 and the left high-beam light 54 are connected to each other at a position laterally inside the left partitioning portion 61.

The right position light 57 is disposed above the right high-beam light 55. As seen in the vehicle front view, the right position light 57 extends laterally outward and upward. The main front cover 31 includes a right partitioning portion 62. The right partitioning portion 62 is disposed between the right position light 57 and the right high-beam light 55. As seen in the vehicle front view, the right partitioning portion 62 extends toward the center of the vehicle from a position between the laterally outer end 551 of the right high-beam light 55 and a laterally outer end 571 of the right position light 57. The right position light 57 and the right high-beam light 55 are connected to each other at a position laterally inside the right partitioning portion 62.

The straddled vehicle 1 includes a left flasher 63 and a right flasher 64. The left and right flashers 63 and 64 are disposed in the front cover 21. When described in detail, the left flasher 63 is disposed in the left front cover 32. The right flasher 64 is disposed in the right front cover 33. The left and right flashers 63 and 64 are located lower than the high-beam lights 54 and 55. Each of the left and right flashers 63 and 64 is located at least in part lower than the top portion of the front wheel 4. Each of the left and right flashers 63 and 64 is located at least in part higher than the top portion of the front wheel 4.

As shown in FIG. 3, the left flasher 63 is disposed at least in part rearward of the high-beam lights 54 and 55. When described in detail, the left flasher 63 is disposed entirely rearward of the high-beam lights 54 and 55. The left flasher 63 is disposed at least in part forward of the low-beam light 53. As shown in FIG. 4, the right flasher 64 is disposed at least in part rearward of the high-beam lights 54 and 55. When described in detail, the right flasher 64 is disposed entirely rearward of the high-beam lights 54 and 55. The right flasher 64 is disposed at least in part forward of the low-beam light 53.

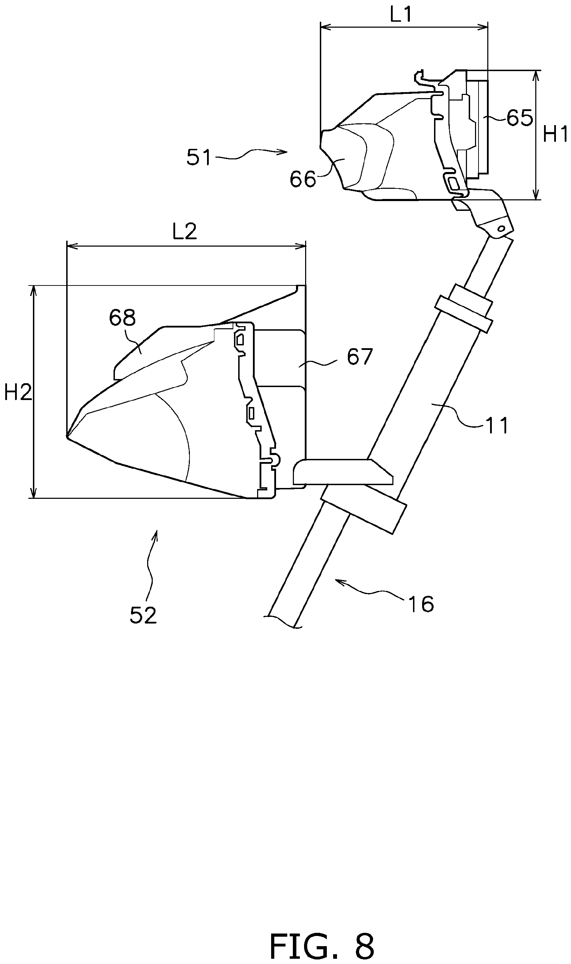

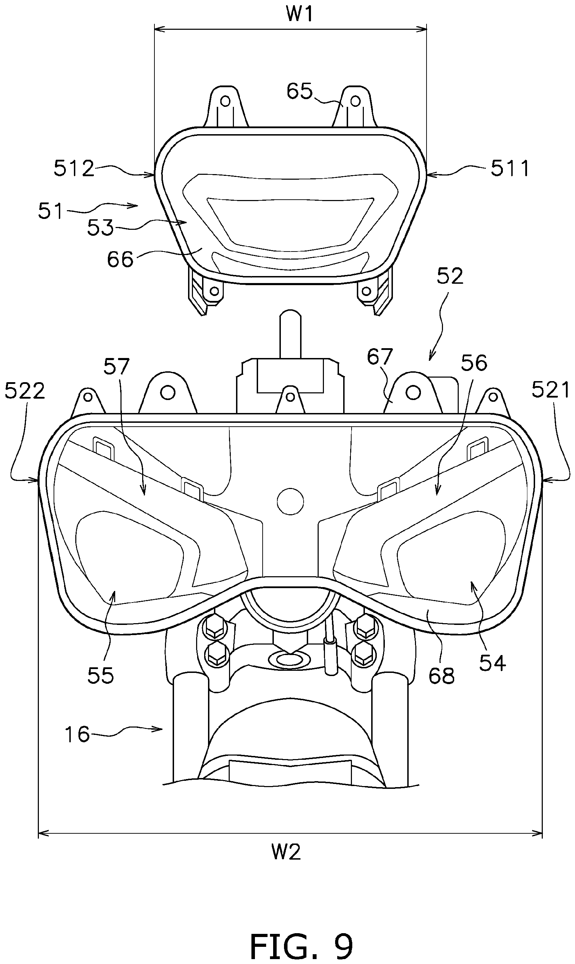

FIG. 8 is a side view of the first and second headlight units 51 and 52. FIG. 9 is a front view of the first and second headlight units 51 and 52. As shown in FIGS. 8 and 9, the first headlight unit 51 includes a first housing 65 and a first clear cover 66. The first clear cover 66 is disposed in front of the first housing 65. The first clear cover 66 is attached to the first housing 65. The second headlight unit 52 includes a second housing 67 and a second clear cover 68. The second clear cover 68 is disposed in front of the second housing 67. The second clear cover 68 is attached to the second housing 67.

As shown in FIG. 8, the maximum up-and-down directional dimension H2 of the second headlight unit 52 is greater than the maximum up-and-down directional dimension H1 of the first headlight unit 51. The maximum back-and-forth directional dimension L2 of the second headlight unit 52 is greater than the maximum back-and-forth directional dimension L1 of the first headlight unit 51. As shown in FIG. 9, the maximum vehicle width directional dimension W2 of the second headlight unit 52 is greater than the maximum vehicle width directional dimension W1 of the first headlight unit 51. Left-hand and right-hand laterally outer ends 521 and 522 of the second headlight unit 52 are located on laterally outer sides than left-hand and right-hand laterally outer ends 511 and 512 of the first headlight unit 51.

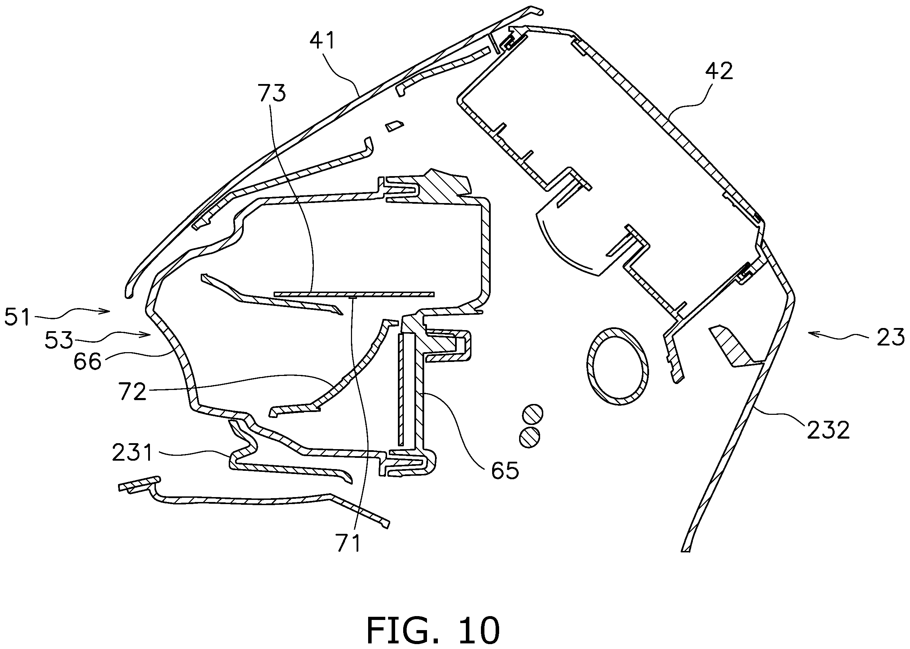

FIG. 10 is a cross-sectional view of FIG. 5 taken along line X-X. As shown in FIG. 10, the low-beam light 53 includes a first light source 71 and a first reflector 72. The first light source 71 is, for instance, an LED. It should be noted that the first light source 71 may be a light bulb. The first headlight unit 51 includes a first board 73. The first light source 71 is attached to the first board 73. The first reflector 72 is disposed at least in part rearward of the first light source 71. The first reflector 72 includes a curved mirror surface. The first reflector 72 forwardly reflects light emitted from the first light source 71.

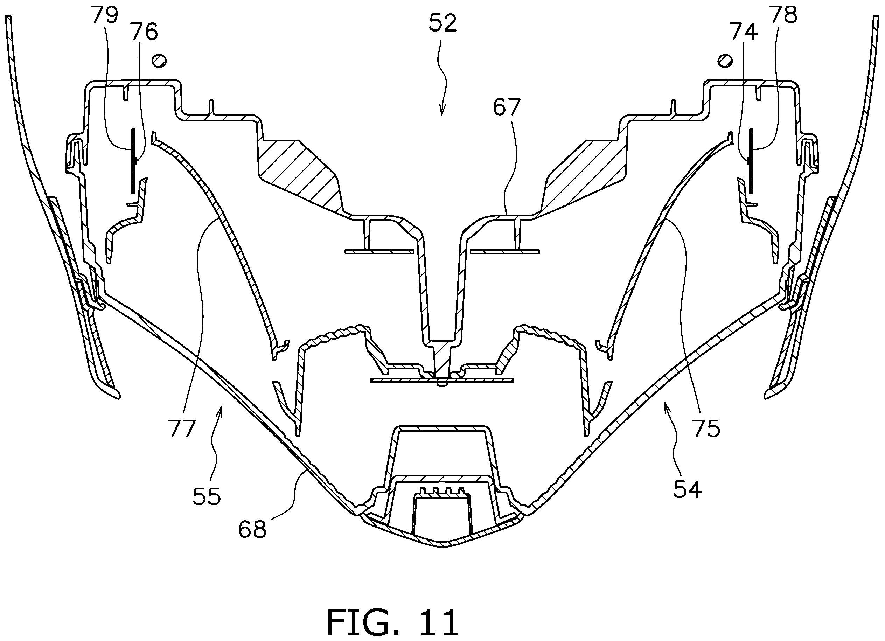

FIG. 11 is a cross-sectional view of FIG. 5 taken along line XI-XI. As shown in FIG. 11, the left high-beam light 54 includes a second left light source 74 and a second left reflector 75. The right high-beam light 55 includes a second right light source 76 and a second right reflector 77. The second left and right light sources 74 and 76 are, for instance, LEDs. It should be noted that the second left and right light sources 74 and 76 may be light bulbs. The second headlight unit 52 includes a second left board 78 and a second right board 79. The second left light source 74 is attached to the second left board 78. The second right light source 76 is attached to the second right board 79.

The second left reflector 75 is disposed at least in part rearward of the second left light source 74. The second left reflector 75 includes a curved mirror surface. The second left reflector 75 forwardly reflects light emitted from the second left light source 74. The second right reflector 77 is disposed at least in part rearward of the second right light source 76. The second right reflector 77 includes a curved mirror surface. The second right reflector 77 forwardly reflects light emitted from the second right light source 76.

In the straddled vehicle 1 explained above, the low-beam light 53 is disposed in the handle cover 23. When the low-beam light 53 is disposed in a low position, a middle part in the irradiation range of light is illuminated with high-intensity light, whereas a part disposed outside the middle part in the irradiation range of light is illuminated with dark light. In comparison with such a condition as described above, the low-beam light 53 is herein disposed in a high position away from the ground, whereby the middle part and the part disposed outside the middle part in the irradiation range of light are illuminated with uniform-intensity light. Because of this, the irradiation range of light can be entirely illuminated with a moderate quantity of light. As a result, the driver can easily grasp details of a road surface condition. Besides, due to the low-beam light 53 disposed in the high position away from the ground, a wide range of the road surface can be illuminated without applying a complicated structure to the low-beam light 53.

The high-beam lights 54 and 55 are disposed in the front cover 21. The front cover 21 is larger than the handle cover 23. Hence, increase in size of the high-beam lights 54 and 55 is made easy. Alternatively, increase in size of the high-beam lights 54 and 55 can be made by utilizing a space conventionally used for disposing the low-beam light 53. Because of this, increase in quantity of light from the high-beam lights 54 and 55 is made easy.

The low-beam light 53 and the high-beam lights 54 and 55 are separately disposed in the handle cover 23 and the front cover 21, respectively. Because of this, in comparison with a structure that the low-beam light 53 is disposed in the front cover 21, the low-beam light 53 can be made compact and simple in structure, while being capable of reliably irradiating a wide range with light. Because of this, the handle cover 23 is made lightweight. Consequently, comfortableness in steering is enhanced.

One embodiment of the present invention has been explained above. However, the present invention is not limited to the embodiment described above, and a variety of changes can be made without departing from the invention defined by the appended claims.

The straddled vehicle 1 is not limited to the moped-type vehicle, and alternatively, may be another type of vehicle such as a scooter. The structure of the straddled vehicle 1 is not limited to that in the embodiment described above and may be changed. For example, the straddled vehicle 1 may have a structure with a flat footboard provided in front of the seat 5. The flat footboard may be entirely flat in the right-and-left direction of the straddled vehicle 1.

The number of front wheels is not limited to one, and alternatively, may be greater than one. The number of rear wheels is not limited to one, and alternatively, may be greater than one. The structure of the vehicle body frame 2 is not limited to that in the embodiment described above and may be changed. For example, the main frame 12 may be changed in shape.

The low-beam light 53 or the high-beam lights 54 and 55 may be changed in shape or layout. For example, the left and right high-beam lights 54 and 55 may be connected to each other. The number of high-beam lights may be one. The left and right position lights 56 and 57 or the left and right flashers 63 and 64 may be changed in shape or layout.

### REFERENCE SIGNS LIST

11···head pipe, 16···front fork, 4···front wheel, 17···handle member, 23···handle cover, 21···front cover, 51···first headlight unit, 52···second headlight unit, 53···low-bearn light, 54, 55···high-beam lights, 63···left flasher, 64···right flasher, 31···main front cover, 32···left front cover, 33···right front cover, 71···first light source, 72···first reflector

## Claims

1. A straddled vehicle (1) comprising:
a head pipe (11) ;
a front fork (16) turnably supported by the head pipe (11);
a front wheel (4) rotatably supported by the front fork (16);
a handle (17) connected to the front fork (4);
a handle cover (23) turned together with the handle (17), the handle cover (23) including a front portion (231) and a rear portion (232), the front portion (231) being disposed in front of the handle (17), the rear portion (232) being disposed behind the handle (17);
a front cover (21) disposed in front of the head pipe (11) and below the handle cover (23);
a first headlight unit (51) provided in the handle cover (23); **characterized by**
a second headlight unit (52) provided in the front cover (23), wherein
the first headlight unit (51) includes a low-beam light (53), and
the second headlight unit (52) includes a high-beam light (54, 55).

2. The straddled vehicle according to claim 1, further comprising:
right and left flashers (64, 63) disposed in the front cover (21).

3. The straddled vehicle according to claim 2, wherein the right and left flashers (64, 63) are located lower than the high-beam light (54, 55).

4. The straddled vehicle according to claim 2 or 3, wherein
the front cover (21) includes
a main front cover (31) disposed above the front wheel (4) as seen in a vehicle front view,
a left front cover (32) extending downward from the main front cover (31), the left front cover (32) being disposed at least in part on left of the front wheel (4) as seen in the vehicle front view, and
a right front cover (33) extending downward from the main front cover (31), the right front cover (33) being disposed at least in part on right of the front wheel (4) as seen in the vehicle front view,
the second headlight unit (52) is disposed in the main front cover (31),
the left flasher (63) is disposed in the left front cover (32) , and
the right flasher (64) is disposed in the right front cover (33).

5. The straddled vehicle according to any of claims 1 to 4, further comprising:
a position light (56, 57) .

6. The straddled vehicle according to claim 5, wherein the position light (56, 57) is disposed in the front cover (21).

7. The straddled vehicle according to claim 5 or 6, wherein the position light (56, 57) is disposed above the high-beam light (54, 55)

8. The straddled vehicle according to any of claims 1 to 7, wherein the low-beam light (53) includes
a first light source (71), and
a first reflector (72) disposed at least in part rearward of the first light source (71), the first reflector (72) forwardly reflecting light emitted from the first light source (71).

9. The straddled vehicle according to any of claims 1 to 8, wherein a laterally outer end (521, 522) of the second headlight unit (52) is located on a laterally outer side than a laterally outer end (511, 512) of the first headlight unit (51).

## Patentansprüche

1. Spreizsitz-Fahrzeug (1), das umfasst:
ein Steuerrohr (11);
eine Vorderradgabel (16), die über das Steuerrohr (11) drehbar gelagert ist;
ein Vorderrad (4), das über die Vorderradgabel (16) drehbar gelagert ist;
einen Griff (17), der mit der Vorderradgabel (4) verbunden ist;
eine Griff-Verkleidung (23), die zusammen mit dem Griff (17) gedreht wird, wobei die Griff-Verkleidung (23) einen vorderen Abschnitt (231) sowie einen hinteren Abschnitt (232) enthält und der vordere Abschnitt (231) vor dem Griff (17) angeordnet ist und der hintere Abschnitt (232) hinter dem Griff (17) angeordnet ist;
eine vordere Verkleidung (21), die vor dem Steuerrohr (11) und unterhalb der Griff-Verkleidung (23) angeordnet ist,
eine erste Scheinwerfer-Einheit (51), die in der Griff-Verkleidung (23) vorhanden ist;
**gekennzeichnet durch**
eine zweite Scheinwerfer-Einheit (52), die in der vorderen Verkleidung (23) vorhanden ist, wobei die erste Scheinwerfer-Einheit (51) einen Fahrlicht-Scheinwerfer (53) enthält und die zweite Scheinwerfer-Einheit (52) einen Fernlicht-Scheinwerfer (54, 55) enthält.

2. Spreizsitz-Fahrzeug (1) nach Anspruch 1, das des Weiteren umfasst:
einen rechten und einen linken Blinker (64, 63), die in der vorderen Verkleidung (21) angeordnet sind.

3. Spreizsitz-Fahrzeug nach Anspruch 2, wobei der rechte und der linke Blinker (64, 63) tiefer angeordnet sind als der Fernlicht-Scheinwerfer (54, 55).

4. Spreizsitz-Fahrzeug (1) nach Anspruch 2 oder 3, wobei
die vordere Verkleidung (21) einschließt:
eine vordere Haupt-Verkleidung (31), die in einer Fahrzeug-Vorderansicht oberhalb des Vorderrades (4) angeordnet ist, eine linke vordere Verkleidung (32), die sich von der vorderen Haupt-Verkleidung (31) nach unten erstreckt, wobei die linke vordere Verkleidung (32), in der Fahrzeug-Vorderansicht gesehen, wenigstens teilweise links von dem Vorderrad (4) angeordnet ist, sowie
eine rechte vordere Verkleidung (33), die sich von der vorderen Haupt-Verkleidung (31) nach unten erstreckt, wobei die rechte vordere Verkleidung (33), in der Fahrzeug-Vorderansicht gesehen, wenigstens teilweise rechts von dem Vorderrad (4) angeordnet ist,
die zweite Scheinwerfer-Einheit (52) in der vorderen Haupt-Verkleidung (31) angeordnet ist,
der linke Blinker (63) in der linken vorderen Verkleidung (32) angeordnet ist, und
der rechte Blinker (64) in der rechten vorderen Verkleidung (33) angeordnet ist.

5. Spreizsitz-Fahrzeug (1) nach einem der Ansprüche 1 bis 4, das des Weiteren umfasst: eine Positionsleuchte (56, 57).

6. Spreizsitz-Fahrzeug nach Anspruch 5, wobei die Positionsleuchte (56, 57) in der vorderen Verkleidung (21) angeordnet ist.

7. Spreizsitz-Fahrzeug nach Anspruch 5 oder 6, wobei die Positionsleuchte (56, 57) oberhalb des Fernlicht-Scheinwerfers (54) angeordnet ist.

8. Spreizsitz-Fahrzeug (1) nach einem der Ansprüche 1 bis 7, wobei der Fahrlicht-Scheinwerfer (53) enthält:
eine erste Lichtquelle (71), und
einen ersten Reflektor (72), der wenigstens teilweise hinter der ersten Lichtquelle (71) angeordnet ist, wobei der erste Reflektor (72) von der ersten Lichtquelle (71) emittiertes Licht nach vorn reflektiert.

9. Spreizsitz-Fahrzeug nach einem der Ansprüche 1 bis 8, wobei ein seitlich außen liegendes Ende (521, 522) der zweiten Scheinwerfer-Einheit (52) sich an einer seitlich weiter außen liegenden Seite befindet als ein seitlich außen liegendes Ende (511, 512) der ersten Scheinwerfer-Einheit (51).

## Revendications

1. Véhicule à selle (1) comprenant :
un tube de tête (11) ;
une fourche avant (16) supportée de façon tournante par le tube de tête (11) ;
une roue avant (4) supportée en rotation par la fourche avant (16) ;
une poignée (17) reliée à la fourche avant (4) ;
un capot de guidon (23) tourné conjointement avec le guidon (17), le capot de guidon (23) comprenant une partie avant (231) et une partie arrière (232), la partie avant (231) étant disposée devant le guidon (17), la partie arrière (232) étant disposée derrière le guidon (17) ;
un capot avant (21) disposé devant le tube de tête (11) et sous le capot de guidon (23) ;
une première unité de phare (51) prévue dans le capot de guidon (23); **caractérisé par**
une deuxième unité de phare (52) prévue dans le capot avant (23), où
la première unité de phare (51) comprend un feu de croisement (53), et
la deuxième unité de phare (52) comprend un feu de route (54, 55).

2. Véhicule à selle selon la revendication 1, comprenant en outre :
des clignotants droit et gauche (64, 63) disposés dans le capot avant (21).

3. Véhicule à selle selon la revendication 2, dans lequel les clignotants droit et gauche (64, 63) sont situés plus bas que le feu de route (54, 55).

4. Véhicule à selle selon la revendication 2 ou 3, dans lequel
le capot avant (21) comprend
un capot avant principal (31) disposé au-dessus de la roue avant (4) dans une vue avant du véhicule,
un capot avant gauche (32) s'étendant vers le bas depuis le capot avant principal (31), le capot avant gauche (32) étant disposé au moins en partie à gauche de la roue avant (4) dans une vue avant du véhicule, et
un capot avant droit (33) s'étendant vers le bas depuis le capot avant principal (31), le capot avant droit (33) étant disposé au moins en partie à droite de la roue avant (4) dans une vue avant du véhicule,
la deuxième unité de phare (52) est disposée dans le capot avant principal (31),
le clignotant gauche (63) est disposé dans le capot avant gauche (32), et
le clignotant droit (64) est disposé dans le capot avant droit (33).

5. Véhicule à selle selon l'une des revendications 1 à 4, comprenant en outre :
un feu de position (56, 57).

6. Véhicule à selle selon la revendication 5, dans lequel le feu de position (56, 57) est disposé dans le capot avant (21).

7. Véhicule à selle selon la revendication 5 ou 6, dans lequel le feu de position (56, 57) est disposé au-dessus du feu de route (54, 55).

8. Véhicule à selle selon l'une des revendications 1 à 7, dans lequel le feu de croisement (53) comprend
une première source lumineuse (71), et
un premier réflecteur (72) disposé au moins en partie à l'arrière de la première source lumineuse (71), le premier réflecteur (72) réfléchissant vers l'avant la lumière émise par la première source lumineuse (71).

9. Véhicule à selle selon l'une des revendications 1 à 8, dans lequel une extrémité latéralement extérieure (521, 522) de la deuxième unité de phare (52) est située sur un côté latéralement plus à l'extérieur qu'une extrémité latéralement extérieure (511, 512) de la première unité de phare (51).
